# EUROPEAN PATENT APPLICATION

(11) **EP 2 410 318 A1**
(43) Date of publication of application: **25.01.2012**
(21) Application number: 11174692.1
(22) Date of filing: 20.07.2011
(51) Int. Cl.: G01N 23/207, G01T 1/29

(54) **Method and system for the acquisition of diffraction patterns**

(30) Priority: 21.07.2010 IT TO20100629
(71) Applicant: Consiglio Nazionale Delle Ricerche, 00185 Roma (IT)
(72) Inventor: Veronesi, Stefano, I-56123 PISA (IT); Tonelli, Mauro, I-56125 PISA (IT); Parisi, Daniela, I-56021 CASCINA (Pisa) (IT)
(74) Representative: Deambrogi, Edgardo

(57) **Abstract**

There are described a process and a system for the acquisition of a diffraction pattern (P) of X-rays, neutrons or electrons impinging on a target (T), operating through the exposure of a detector screen (S) to a backscattering radiation from the target (T), the spatial distribution whereof is indicative of a diffraction pattern (P) of the target (T), so the screen locally changes its energetic state in order to temporarily record a latent image of the diffraction pattern (P). The recorded image of the diffraction pattern (P) is read by screen lighting with an electromagnetic excitation radiation capable of causing the emission of a photoluminescence radiation at the latent image area. The illumination of the screen (S) is even throughout the detection area for a predetermined length of time in such a way as to cause the simultaneous excitation of regions of the latent image area with an altered energy state. The acquisition of the visible image of the diffraction pattern (P) includes the photoelectrical detection of the photoluminescence radiation and the conversion of the light intensity detected into a plurality of digital image data.

## Description

The present invention relates to the technology of acquisition of patterns of diffraction of X-rays, neutrons or electrons impinging on a target, and more specifically a method and a system for the acquisition of a diffraction pattern according to the preamble of claims 1 and 7, for applications in crystallography and radiography, respectively.

The crystallographic characterization of solid materials is known to employ the technique of X-ray diffraction to obtain information about the crystal structure of the material. The image produced by X-ray diffraction through the space of atomic lattice of a crystal (or crystalline powder) is recorded on a screen, such as a photographic plate, and then analyzed to reveal the crystal structure of the material.

Although the most common crystallographic methods are based on the analysis of the diffraction patterns emerging from a sample targeted by a beam of X-rays, other radiations that highly interact with the matter can be used for this purpose, such as electron or neutrons beams, producing a diffraction image from the analysis whereof it is possible to deduce the characteristics of the material.

As with technical applications, including the above crystallographic applications, the diffusion of X-rays from the tissues is also used in biological applications for the medical examination of patients. The image produced by the diffusion of X-rays through the body of an individual, depending on the different transparency of the tissues in question, is displayed on a screen or recorded on a photographic plate, and then observed to deduce diagnostic data.

In both applications, in diffractometers as well as in medical or biomedical devices for radio-diagnostic, common photographic plates are typically used, for example photographic plates with Polaroid type self-developing film, and the images thus obtained are optionally converted in digital format through optical scanning devices.

A specific technical application of X-ray crystallography is the reconstruction of the orientation of the crystallographic axes of a crystalline sample in a Laue chamber. Since the optical properties of a material depend on its orientation, this technique is employed in view of the spectroscopic characterization of single crystals of innovative materials, such as fluoride and oxide crystals doped with trivalent rare earth ions, used as active materials for the realization of solid state lasers or scintillators.

To perform this analysis it is necessary to insert the entire crystal, mounted on a suitable goniometer, in the irradiation chamber (Laue chamber, in fact). Since the crystals are massive, the only possibility of characterization is given by the observation of back-scattering phenomena of the radiation impinging on the surface of the crystal.

The use of the Laue chamber for the orientation of crystals is a technique known for several years and commercial instruments have been manufactured.

Although these instruments have undergone improvements over the time in terms of technology, they have maintained the use of self-developing photographic plates as an element sensitive to X-rays.

Recently, for market reasons, the production of such plates has ceased, and therefore it is no longer possible to perform the analysis with the diffractometer of the type shown that are still available, nor new image acquisition devices have been made commercially available as a replacement of the self-developing plates that operate according to a similar principle for observing the back-scattering phenomena.

Recently, with the availability of increasingly sophisticated CCD sensors, which have almost completely replaced photographic plates and films, new systems for capturing images in digital format have been developed, used in the field of radiography in computer-assisted image diagnosis, primarily made for medical use in digital radiography and for the study of molecular structures in the biomedical field. They are based on the use of photoluminescent detectors for image capture and storage, for example of the type described in patent application US 2006/076525.

Examples of such detectors are plates comprising a layer of phosphors that may be photo-stimulated, such as europium-activated barium fluoride halides, scattered on a flexible resin support. The energy of the diffracted X-rays that impinge the plate is stored by the phosphorescent composition in so-called colour centers and forms a latent image. The excitation of phosphors by means of a laser source emitting in the wavelength at which they are sensitive (typically around the wavelength of red) results in the emission of a radiation at a different wavelength (typically, in blue) by the colour centers, which is detected by photodetector sensors of an image acquisition system, comprising analog-digital converters that transform the image electrical signals from the analog format into numerical data.

A method of X-ray, neutron or electron diffraction, and a relative equipment for the acquisition of a diffraction pattern comprising a photoluminescent plate are described, for example, in US Patent 5,936,255.

The method of analyzing a sample of solid material described in US 5,936,255 is based on an imaging plate, comprising a flexible substrate coated evenly with BaFBr: Eu2 + crystals, or similar photoluminescent material. When the plate is irradiated with a beam of X-rays, neutrons or electrons the formation of metastable colour centers occurs in the photoluminescent material. The diffraction image irradiated on the plate accumulates as a distribution of concentration of colour centers and forms a latent image. Irradiated by visible light, the colour centers end up, with the simultaneous emission of photoluminescence radiation, whose emission intensity is proportional to the intensity of the diffracted rays that impinged on the plate.

According to the technique described in US 5,936,255, reading of the latent image on the plate is performed by means of scanning the detection area with a focused laser beam, aimed at causing the emission of photoluminescence. The emission spectral intensity is measured using a photomultiplier and the analog signals obtained are converted into digital data that contribute to the diffraction image reconstruction by means of a processor associated to the acquisition system.

The plate thus acts as a two-dimensional integration detector.

The residual image after the reading can be completely removed by irradiation with visible light and the plate can be reused many times.

Disadvantageously, the image acquisition is done point by point using a laser illuminator and microscope optics mounted on an XY scanning device that scans the detection plate over the entire surface area. Such acquisition method is very complex and expensive. The handling mechanics of the scanning light source must be very precise and reproducible in the movements of the light beam used for reading. The imaging plates described and the relative integrated support electronics for recording and transferring the digital image on a remote processor are therefore rather cumbersome and expensive acquisition systems.

US 4,933,558 describes a device for detecting X-ray diffraction patterns produced by a target illuminated by an explorative radiation on a film of phosphors that may be photo-stimulated arranged behind it.

Moreover, these systems, if effective in medical grade applications, wherein the observation in transmission is used, are not suitable for use in a Laue chamber for an experimental configuration of characterization of the materials as described at the beginning of this description, wherein the plate irradiation is mainly due to backscattering of X-rays incident on massive targets. In fact, due to their thickness, these plates cannot be crossed by the X-ray beam irradiating the target.

A technique in transmission, such as that described in US 4,933,558, can help determining the lattice parameters of a massive crystal, but can not orientate it. This results from the fact that the imaging plate cannot be impressed behind the sample, since it almost completely absorbs the incident radiation. The radiation that could pass through the sample would in any case derive from countless diffractive processes, making it very difficult to reconstruct the symmetry of the crystal lattice.

Therefore, the only way to orientate mono-crystalline samples of macroscopic size (in the order of millimeters) is to observe the radiation diffracted back by the crystal and acquired by a plate positioned between the source and the sample to be analyzed.

To date, there are no substitute devices of the photographic plates for use in the observation of the diffraction patterns obtained by backscattering of a test radiation in Laue chamber.

The present invention aims to provide a satisfactory solution to the problems set out above, avoiding the drawbacks of the prior art.

According to the present invention, such object is achieved by a method for the acquisition of a diffraction pattern of a radiation impinging on a target, having the features mentioned in claim 1.

A further subject of the invention is a system for the acquisition of a diffraction pattern of a radiation impinging on a target, with the features mentioned in claim 7.

Special embodiments of the invention are the subject of the dependent claims, whose contents are to be understood as an integral or integrating part of the present description.

In summary, the present invention is based on the principle of acquiring a diffraction pattern of X-rays, and more generally a diffusion pattern of an explorative radiation impinging on a target, separating a step of temporary registration of a latent image of a back-scattering pattern, produced by the target on a detection support, from a step of reading for the display and optional permanent storage of the back-scattering pattern recorded in digital format.

The system in re has several innovative features compared to the known solutions.

Although it is difficult to make a real comparison with commercial devices, since they are made for other purposes and therefore not suitable, or not easily adaptable to the use of crystallographic characterization of materials by back-scattering described herein, the system according to the invention discloses a method of image acquisition substantially similar to the above prior art, i.e. based on the excitation of phosphors that may be photo-stimulated, but wherein the reading of the latent image from the detection substrate previously exposed to the backscattered radiation from the target is greatly simplified.

In fact, the reading is done uniformly illuminating the entire surface of the detection substrate so that the entire image of the diffraction pattern is simultaneously acquired, that is, the data for each image element are acquired simultaneously in parallel, thus decreasing the acquisition time of the diffraction pattern, greatly reducing system costs and simplifying the devices that compose it.

The system according to the invention is extremely more versatile than the self-developing photographic plates, as the detection substrate has a very long lifetime and can be used many times, reducing operating costs. In addition, the acquisition of an image is simplified, directly in digital format and of better quality.

Additional features and advantages of the invention will appear more clearly from the following detailed description of an embodiment thereof, given by way of a non-limiting example, with reference to the attached drawings wherein:
Figure 1 is a schematic representation of a system for forming diffraction patterns on a detection substrate arranged in a Laue chamber;
Figure 2 is a representation of an arrangement for the acquisition of the diffraction patterns formed on the detection substrate, according to the invention;
Figure 3 is a cross-section view of an arrangement for the acquisition of the diffraction patterns formed on the detection substrate, according to the invention, and
Figures 4a-4c are exemplary images of diffraction patterns.

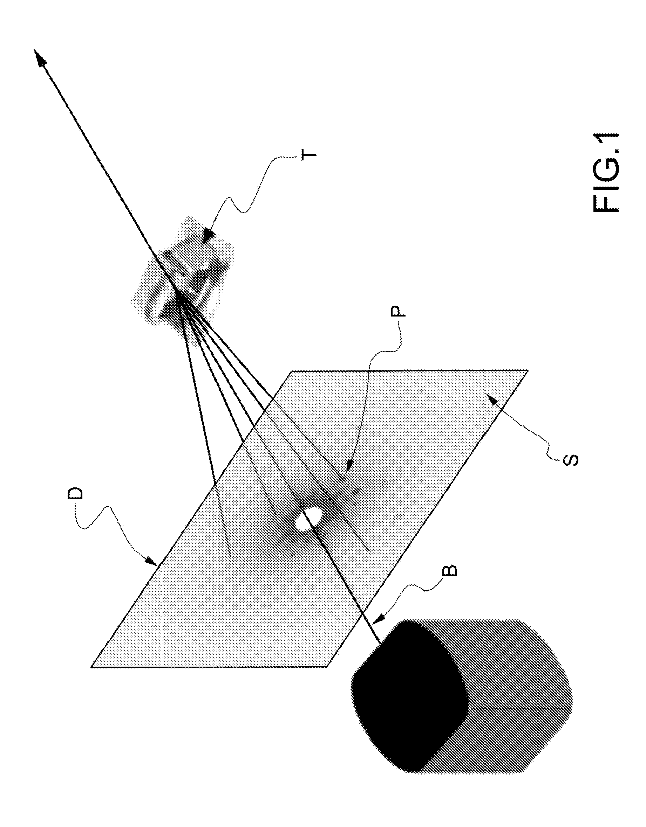

A system for forming the diffraction patterns from radiations impinging on a material and backscattered on a detection support arranged in a Laue chamber is shown schematically in Figure 1.

A solid target, such as a sample of known material whereof the orientation of the crystallographic axes is to be determined, or an unknown material whereof the physical and structural properties are to be determined, is indicated T.

A collimated beam B of wide spectrum X-rays (or, similarly, of neutron or electron radiation) is irradiated to illuminate a predetermined area of the target. The illumination radiation is diffracted by the target in a spatial region and at least partly collected on an absorption screen S sensitive to X-rays (to the neutron or electron radiation), comprising a photographic film or similar position-sensitive two-dimensional detection substrate, arranged near the sample. A diffraction pattern P is formed as a latent image on screen S by collecting the beams diffracted by the material in the directions intercepted by the screen.

In a backscattering analysis configuration, the screen is interposed between the emission source and the target for recording the beams backscattered by the material. A man skilled in the art will understand that the system representation given in Figure 1 is illustrative only, and that the screen S may be rigid or flexible to take any suitable shape, besides the flat shape shown in the figure, for example to be shaped according to a particular curvature in order to at least partially surround the target.

The screen should also allow the passage of the radiation incident on the sample in the backscattering configuration.

The detection substrate D used in the system according to the invention is a photoluminescent material substrate, such as a layer of phosphors, specifically barium fluoride halides doped with rare earths (BaSrFBr:Eu), as in the case of the plate ADC MD30 marketed by AGFA, which has properties of luminescence at a wavelength of 400nm.

When the layer of phosphors is impinged by the scattered radiation, secondary electrons are trapped in colour centers, called F-centers, which are metastable. The number of colour centers generated is proportional to the energy of the radiation incident on the detection substrate. The typical conversion efficiency of these phosphors (number of colour centers per unit of energy for incident X-rays) is of the order of 8 colour centers for keV of energy of the incident radiation (this efficiency is specific to X-rays). So, for the X-rays produced by the Kα radiation of copper, which have an energy of 8.1 keV, about 64 colour centers are produced for each incident X photon.

An important parameter that characterizes the detection substrate D is its quantum efficiency, i.e. the number of X-rays converted to colour centers compared to that sent on the sample. The quantum efficiency strictly depends on the intensity of the Bragg reflection of the material under analysis. Typical values for the detection substrate described (BaSrFBr:Eu) are between 5% and 20%.

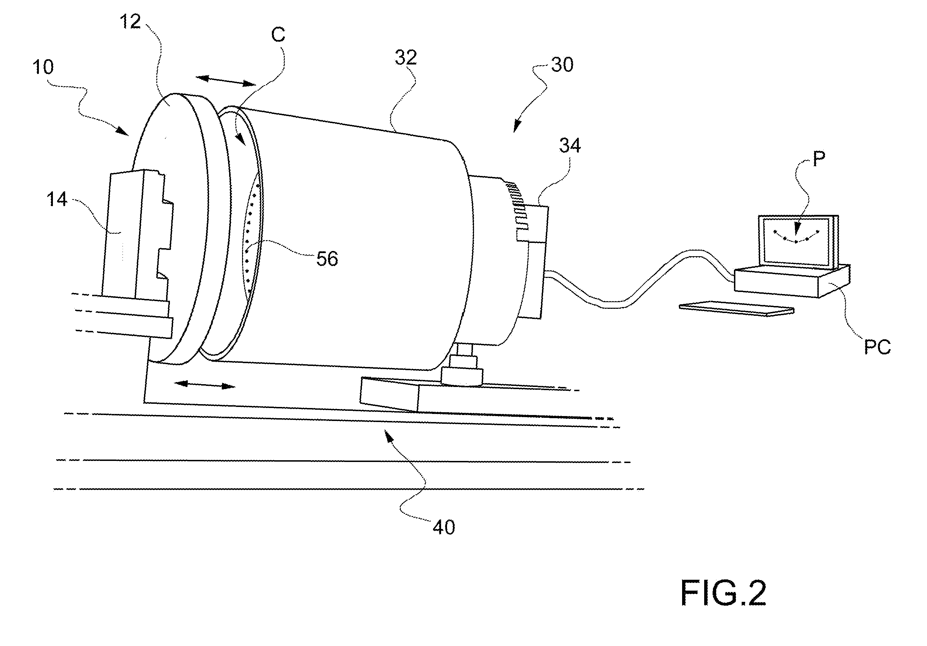

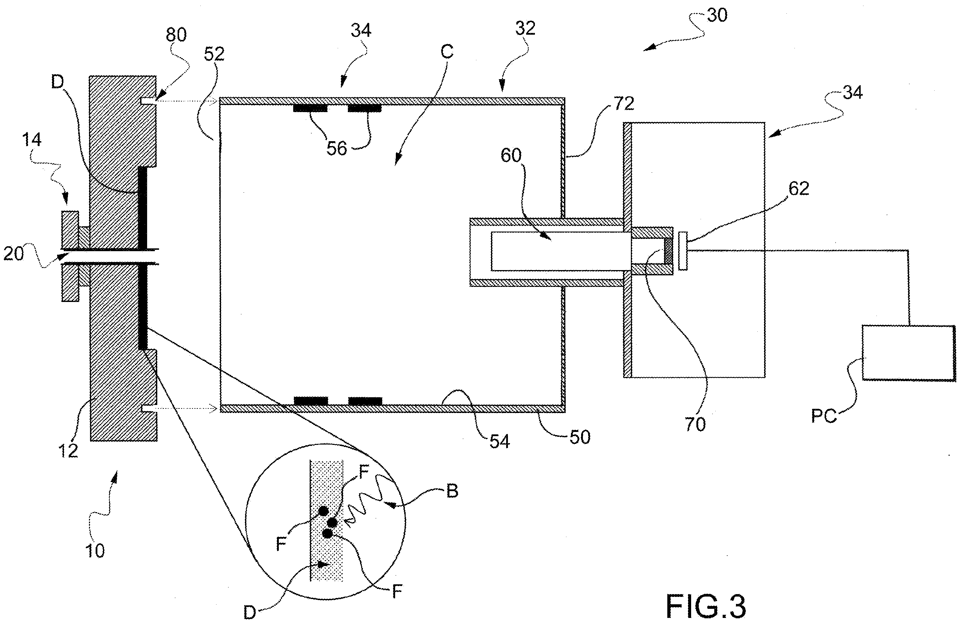

For the purposes of the invention the detection substrate D is housed in a support 10 (shown in Figures 2 and 3) adapted to be inserted into the Laue chamber. The support comprises a disc 12 of plastic material for supporting the detection substrate in the shape of a plate (e.g., sized 9x12 cm), whereto means 14 for anchoring to the X-ray equipment of the Laue chamber (not shown) and to an optical bench for reading the recorded image are associated.

Support 10 of the detection substrate has an axial collimator system 20 to form a beam of X-rays from an external source. The detection substrate D has a hole at its center to allow the transmission of X-rays to the target without attenuation.

Figures 2 and 3 show an arrangement 30 for acquiring the latent diffraction patterns formed on the detection substrate following the backscattering of the incident X-ray by the target. The arrangement is conveniently installable on a stabilized optical bench 40, for example a bench including a support rail provided with side supports to ensure the mechanical stability of the assembly.

The arrangement for the acquisition of diffraction images recorded on the detection substrate D comprises an illuminator assembly 32 of the detection substrate and an associated imaging device 34 in digital format, arranged in a cascade and centered around the normal axis of the detection substrate. The figures also show associated image control and display means, in the form of a computer PC.

The illuminator assembly 32 causes an excitation of the detection substrate D and comprises an array of light emitting diodes 34 adapted to emit a red light radiation with emission peak around 660 nm to determine a uniform illumination, that is, complete and concurrent, of the entire image area of the detection substrate.

In the currently preferred embodiment, it has a tubular structure 50 with axial symmetry (cylindrical), partially closed on the side opposite the lighting opening 52, on the inner surface 54 whereof there are mounted two annular bands 56 of LED devices, each one whereof includes a plurality of regularly spaced devices.

The inner surface of the tubular structure 54 is conveniently treated with a reflective material (white coating) in order to diffuse the light emitted by the LED devices evenly to the detection substrate D.

The emission spectrum of the illuminator assembly is such that it overlaps the excitation band of the colour centers (indicated by F in Figure 3) of the detection substrate. The illumination of the detection substrate at the excitation wavelength causes the emission of light radiation at a different wavelength (blue) by the detection substrate (specifically, by the colour centers F formed in the detection substrate), which visually represents the latent image of the diffraction pattern P produced by the X-rays scattered towards the detection substrate D.

The emission of radiation in the wavelength of blue is due to de-excitation of the colour centers, and is revealed by the associated imaging device 34.

In the de-excitation process, called bleaching, colour centers F are destroyed so the latent image is deleted and the detection substrate D is restored for a new exposure.

The detection substrate preferably has a range of excitation in the spectral region between 550 and 700 nm, with a peak at about 640 nm and an emission spectrum in the spectral region between 390 and 420 nm, with a peak at 400 nm. This feature of net separation between the ranges of wavelength of excitation and emission allows suitably filtering the radiation incident on the acquisition device, so as to cut the excitation radiation emitted by the illumination assembly in the red, which would be an unwanted noise, and only collect the photoluminescence radiation in the blue.

The fraction of de-excited colour centers F is a function of the intensity of the illumination radiation and its persistence time. With a suitable intensity of illumination and for a typical persistency time of the illumination radiation of the order of few seconds, typical efficiencies from 10 to 30% are obtained.

To get a complete bleaching of the detection substrate and avoid residues of the previous exposure in a subsequent application, after reading of the latent image, it is preferably exposed to illumination with white light for about 1 minute. This operation is not necessary if between one exposure and the following one a long time elapses compared to the mean persistence time (lifetime) of the colour centers, in the order of several hours.

For the best capture of the photoluminescence image emitted by the detection substrate D, this is arranged in the focal plane of the acquisition device 34, formed for example by a commercial CCD camera provided with a lens 60 with focal length of 17 mm and focal ratio f# = 0.95.

To maximize the amount of photoluminescence radiation collected by lens 60 of the camera, the detection substrate D must be arranged as close as possible to the detection complex (CCD) 62 of the camera while focusing the entire image area on the detection substrate. In the example above, the focal length was chosen so as to have a good compromise between the position of the focal plane and the size of the object to be acquired (9x12 cm in the example), and the focal ratio was chosen to ensure a good lighting.

The switching on of the LED devices of the illuminator assembly is advantageously driven in synchronism by a control and management program of the digital camera, so as to activate the excitation illumination of the detection substrate and concurrently start the image acquisition.

Behind lens 60 of the digital camera there is placed an optical filter 70 adapted to cut the excitation radiation of the detection substrate emitted by the illuminator assembly and undesirably collected by the lens, not to influence the detection capability of the acquisition device with spurious radiation.

Advantageously, the illuminator assembly 32 is supported on the front of the acquisition device 34, for example through a ring nut screwing on the objective lens, so as to exhibit the back wall 72 opposite the lighting opening 52 completely closed outwards, and form an illumination chamber C with opening facing the detection substrate. The spurious emission of radiation at the wavelength of excitation towards the acquisition device is suitably blocked by the filter associated to the camera lens.

At the opening of the lighting opening, the illuminator assembly is fittable in a circumferential seat 80 obtained on the support 10 for housing the detection substrate D so as to form a completely closed lighting chamber C, substantially free from external light noises.

Of course, the lighting complex and the lighting chamber may be made in other shapes and comprise one or more light emitting devices of a different type, according to a different arrangement, without departing from the scope of the invention.

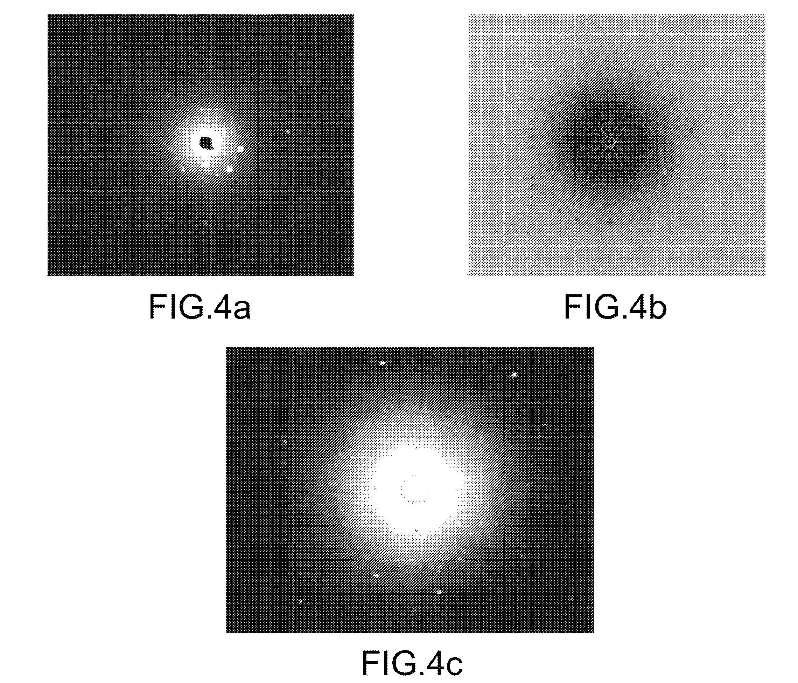

The system for acquiring diffraction patterns according to the invention has been tested to verify proper operation thereof. Figures 4a-4c show the images of a diffraction pattern and relative simulation, obtained against a crystal KYF4 exposed for 30 minutes to an illuminating X radiation emitted by an X-ray equipment operated at 25 kV and 35 mA.

The diffraction pattern is clearly visible and usable for a simulation of the orientation of the crystalline axes.

Figure 4a shows a digital image of the diffraction pattern obtained with the arrangement according to the invention, and figure 4b shows a simulation of the same. For comparison, figure 4c shows a digitized image obtained from an analog image obtained on a self-developing photographic plate for the same material, with similar exposure parameters.

It is noted that the image obtained with the acquisition system according to the invention is much clearer and more legible.

The proposed system is therefore a better replacement of photographic plates, and has lower costs compared to other solutions available on the market, such as imaging plates for biomedical applications, which would need a remarkable work of adaptation to be used in operating conditions of a Laue chamber for the characterization of materials from the backscattering of radiation X.

One possible application of the system according to the invention is that described in the present document, for the construction of new generation Laue chambers.

The system's versatility allows its application also in combination with devices for use in biomedical imaging wherein imaging plates or CCD cameras with X-ray sensors as direct detectors are currently used. The most significant difference between the technical applications in crystallography and medical applications lies in the size of the detection area of the radiations scattered by the target (up to 50x70 cm in medical devices), but the use of specific lenses to capture images of objects of different dimensions allows easily overcoming this drawback.

Of course, keeping the principle of the invention, the manufacturing details and the embodiments may widely vary compared to what was described and illustrated by way of a non-limiting example only, without departing from the scope of the invention as defined in the appended claims.

## Claims

1. A method for the acquisition of a diffraction pattern (P) of X-rays, neutrons or electrons impinging on a target (T), comprising the steps of:
- arranging detectors means (S) capable of absorbing a radiation incident on a detection area and of locally changing their energy state so as to temporarily record a latent image of a diffraction pattern (P);
- exposing said detectors means (S) to a radiation diffracted from the target (T), whose spatial distribution is indicative of a diffraction pattern of the target; and
- reading the recorded image of the diffraction pattern (P), including:
- illuminating said detector means (S) by means of an electromagnetic radiation at a first excitation wavelength, so as to cause the emission of photoluminescence electromagnetic radiation at a second wavelength different from the first wavelength, in correspondence of the area of the latent image; and
- capturing a visible image of the diffraction pattern (P) by detecting said photoluminescence radiation,
**characterized in that** it comprises, in a recording step of an image of the diffraction pattern (P), arranging detector means (S) between a source emitting X-rays, neutrons or electrons and the target (T) in a Laue chamber for intercepting the backscattering radiation from the target (T), the detector means (S) being adapted to allow transmission of the incident radiation from the emission source toward the target (T) without substantial alternation, and, successively, in a reading step of the recorded image of the diffraction pattern (P), the association of the detectors means (S) having a latent image temporarily recorded these on with a separated illumination chamber (C) for the excitation of a photoluminescence radiation from the area of the latent image.

2. A method according to claim 1, **characterized in that** the illumination of said detectors means (S) is performed uniformly over the whole detection area for a predetermined period of time so as to cause the simultaneous excitation of the regions of said area with a modified energy state, and
the capturing of the visible image of the diffraction pattern (P) comprises the photoelectric detection of the photoluminescence radiation and the conversion of the detected light intensity in a plurality of digital image data.

3. A method according to claim 1 or 2, wherein the steps of illuminating and capturing of a visible image are carried out synchronously.

4. A method according to any of the previous claims, wherein the capturing of the visible image of the diffraction pattern (P) comprises arranging said detectors means (S) in the focal plane of capture of the photoluminescence radiation by means of photoelectric sensors means (62).

5. A method according to claim 1, comprising the display of the visible image of the diffraction pattern (P) from the digital image data and the permanent storage of said data on a non-volatile memory medium (PC).

6. A method according to any of the previous claims, comprising resetting the detection means (S) by illuminating the detection area with white light for a predetermined period of time.

7. A system for the acquisition of a diffraction pattern (P) of X rays, neutrons or electrons impinging on a target (T), comprising:
- detecting means (S) adapted to absorb a diffraction radiation incident on a detection area, whose spatial distribution is indicative of a diffraction pattern (P) of the target (T), and adapted to locally change their energy state so as to temporarily record a latent image of a diffraction pattern (P); and
- an arrangement (32, 34) for reading the recorded image of the diffraction pattern (P), including
- illuminating means (32) adapted to illuminate said detecting means (S) by means of an electromagnetic radiation at a first excitation wavelength, so as to cause the emission of photoluminescence electromagnetic radiation at a second wavelength different from the first wavelength, in correspondence of the latent image area; and
- means (34) for capturing a visible image of the diffraction pattern (P) by means of the detection of said photoluminescence radiation,
**characterized in that** said detecting means (S) responsive to X-rays, neutrons and electrons comprise a two-dimensional detection substrate (D) responsive to position, adapted to be inserted into a Laue chamber for intercepting the radiation backscattered from target (T) in a predefined surrounding of space, in an arrangement for recording an image of the diffraction pattern (P), wherein the detection substrate (D) is plate-shaped, provided with a central hole to enable the transmission of the incident radiation toward the target (T) without substantial attenuation.

8. A system according to claim 7, **characterized in that** the illuminating means (32) are arranged for uniformly sending and excitation radiation over the whole detecting area of said detecting means (S) for a predetermined period of time so as to cause the simultaneous excitation of the regions of said area having a modified energy state, and
the capturing means (34) include photoelectric sensors means (62) for capturing the photoluminescence radiation emitted in correspondence of the latent image area of the detecting means (S), and means for converting the detected light intensity in a plurality of digital image data.

9. A system according to claim 7 or 8, wherein the detection substrate (D) is sustained by a housing support (10), having anchoring means (14) for its firm positioning on an optical bench in a reading arrangement of the recorded image of the diffraction pattern (P).

10. A system according to any one of claims 7 to 9, wherein the detection substrate (D) comprises an axial collimator system (20) adapted to form a beam (B) of the radiation incident on the target (T) from an external source when said substrate (D) is used in the recording arrangement of the diffraction pattern (P).

11. A system according to claim 9, wherein the reading arrangement of the diffraction images recorded on the detection substrate (D) comprises an assembly (32) for illuminating the detection substrate and an associated device for the capture of images in digital format (34), cascaded and centred around the normal axis of the detection substrate (D).

12. A system according to claim 11, wherein the illuminating assembly (32) defines an illumination chamber (C) and includes an associated array of light emitting devices (34).

13. A system according to claim 12, wherein the illumination chamber (C) has a tubular structure (50), on whose inner surface (54) is placed an annular arrangement (56) of light emitting devices.

14. A system according to claim 13, wherein the inner surface (54) of the illumination chamber (C) is coated with a reflective material so as to uniformly diffuse the light emitted by the light emitting devices (34; 56) toward the detection substrate (D).

15. A system according to claim 13, wherein the tubular structure (50) of the illumination chamber (C) is adapted to couple with the housing support (10) of the detection substrate (D) so as to form a closed chamber.

16. A system according to claim 11, wherein the image capturing device (34) includes filtering means (70) adapted to cut the excitation radiation of the detection substrate (D) emitted by the illuminating assembly (32).

17. A system according to claim 11, wherein the arrangement for reading the images the detection substrate (D) is placed in the focal plane of the capturing device (34).

18. A system according to claim 11, comprising synchronization means adapted to drive the switch-on of the illuminating means (32) for exciting the detection substrate (D) simultaneously with the activation of the sensors means (62) for capturing the photoluminescence radiation.

19. A system according to any claims from 7 to 18, including means for resetting detection substrate (D), comprising white illuminating means.

20. A system according to any claims from 7 to 19, wherein the detection substrate (D) is a substrate of photoluminescent material, including Barium halide-fluoride doped with rare earths (BaSrFBr:Eu), adapted to create metastable colour centres as a result of the absorption of diffuse X-rays, neutrons or electrons incident on the detection substrate (D).
